# EUROPÄISCHE PATENTANMELDUNG

(11) **EP 2 767 737 A1**
(43) Veröffentlichungstag der Anmeldung: **20.08.2014**
(21) Anmeldenummer: 14150872.1
(22) Anmeldetag: 13.01.2014
(51) Int. Cl.: F16H 61/24, F16H 63/30, F16H 61/18

(54) **Schalteinrichtung mit einer Kulissenführung für ein Fahrzeuggetriebe**

(30) Priorität: 13.02.2013 DE 102013202273
(71) Anmelder: ZF Friedrichshafen AG, 88038 Friedrichshafen (DE)
(72) Erfinder: Rother, Sylva, 88079 Kressbronn (DE)

(57) **Zusammenfassung**

Es wird eine Schalteinrichtung mit einer eine Wählgasse (2) und mehrere Schaltgassen (3, 4, 5, 6, 7) aufweisenden Kulissenführung (1) für ein Fahrzeuggetriebe vorgeschlagen, wobei über die Kulissenführung (8) eine Schalt- und Wählwelle (1) zum Wählen und Schalten von zumindest mehreren Gangstufen (R, G1, G2, G3, G4, G5, G6, G7) betätigbar ist, und wobei die Kulissenführung (1) zumindest eine Schaltsperre (8) zum unbeabsichtigten Überspringen einer Schaltgasse (6) aufweist.

## Beschreibung

Die vorliegende Erfindung betrifft eine Schalteinrichtung mit einer eine Wählgasse und mehrere Schaltgassen aufweisenden Kulissenführung für ein Fahrzeuggetriebe gemäß der im Oberbegriff des Patentanspruches 1 näher definierten Art.

Schalteinrichtungen für Handschaltgetriebe weisen eine Schalt- und Wählwelle auf, die über eine Kulissenführung mit einem entsprechenden Schaltbild mit zumindest einer Wählgasse und mehreren Schaltgassen betätigt wird. Die korrekte Wahl der Schaltgassen kann durch entsprechende Rastierungen unterstützt werden. Beispielsweise ist eine Rastierung für die Neutralposition vorgesehen, so dass der Wähl- bzw. Schalthebel in der unbetätigten Position automatisch in der Wählgasse im Bereich der dritten Schaltgasse angeordnet ist, welcher die dritte und vierte Gangstufe zugeordnet sind.

Beispielsweise aus der Druckschrift DE 10 2010 029 864 A1 ist eine Anordnung mit einer Kulissenführung bzw. einem Mitnehmerelement einer Schalteinrichtung bekannt, bei der die Bewegungen eines Wählhebels und eines Schalthebels über das Mitnehmerelement auf die Schalt- und Wählwelle zum Betätigen von Schaltelementen übertragen wird. Bei der bekannten Anordnung ist das Mitnehmerelement als Multifunktionsbauteil mit zumindest einer Funktionsfläche zum Ausführen zusätzlicher Funktionen bei einem Wähl- und Schaltvorgang ausgeführt.

Bei einem manuell-geschalteten 7-Ganggetriebe sind mit der Rückwärtsgangstufe insgesamt acht Gangstufen vorgesehen, wobei z. B. insgesamt fünf Schaltgassen über eine Wählgasse verbunden sind. Beispielsweise kann der ersten Schaltgasse nur die Rückwärtsgangstufe zugeordnet sein, wobei der zweiten Schaltgasse die erste Gangstufe und die zweite Gangstufe, der dritten Schaltgasse die dritte und vierte Gangstufe, der vierten Schaltgasse die fünfte und sechste Gangstufe und der fünften Schaltgasse ausschließlich die siebente Gangstufe zugeordnet sein können. Bei einer derartigen Kulissenführung mit dem vorbeschriebenen Schaltbild ergibt sich das Problem, dass beispielsweise ausgehend von der Neutralposition im Bereich der dritten Schaltgasse versehentlich anstelle der fünften oder sechsten Gangstufe die siebente Gangstufe gewählt und geschaltet wird. Eine zusätzliche Rastierungen zur Erhöhung der Schaltkräfte bei der Schaltgassenwahl ist aus Schaltkomfort- und Sicherheitsgründen nicht möglich.

Demzufolge liegt der vorliegenden Erfindung die Aufgabe zu Grunde, eine Schalteinrichtung der eingangs beschriebenen Gattung vorzuschlagen, bei der Fehlschaltungen ohne Schaltkomfort- und Sicherheitseinbußen verhindert werden.

Diese Aufgabe wird erfindungsgemäß durch die Merkmale des Patentanspruches 1 gelöst. Vorteilhafte Ausgestaltungen ergeben sich insbesondere aus den Unteransprüchen, der Beschreibung und den Zeichnungen.

Somit wird eine Schalteinrichtung für ein Fahrzeuggetriebe mit einer eine Wählgasse und mehrere Schaltgassen aufweisenden Kulissenführung vorgeschlagen, wobei über die Kulissenführung eine Schalt- und Wählwelle zum Wählen und Schalten von mehreren Gangstufen betätigbar ist. Erfindungsgemäß ist vorgesehen, dass die Kulissenführung zumindest eine Schaltsperre zum unbeabsichtigten Überspringen einer Schaltgasse aufweist. Über die vorgesehene Schaltsperre wird die Wählbewegung blockiert bzw. beendet, wenn der Schalthebel bzw. der Kulissenstift in der zu wählenden Schaltgasse angeordnet ist. Auf diese Weise werden weitergehende Wählbewegungen verhindert, so dass keine Fehlschaltungen auftreten. Durch die vorgesehene Schaltsperre ergeben sich in vorteilhafter Weise weder Schaltkomforteinbußen noch Sicherheitseinbußen. Ferner wird bei der vorgeschlagenen Schalteinrichtung mit der Schaltsperre keine unerwünschte Erhöhung der Schaltkraft realisiert.

Um die Schaltsperre bzw. den Anschlag oder dergleichen in der Kulissenführung darzustellen, kann beispielsweise eine vorbestimmte Schaltgassenflanke bzw. Nutflanke der Schaltgasse entsprechend umgeformt werden. Im einfachsten Fall kann die Schaltgassenflanke bzw. Nutflanke einfach verlängert werden, so dass das Ende der Schaltgassenflanke bzw. der Nutflanke in die quer zur Schaltgasse verlaufende Wählgasse zumindest abschnittsweise hineinragt bzw. diese durchläuft, so dass die Wählbewegung durch die verlängerte Schaltgassenflanke blockiert wird. Je verwendetem Schaltbild bei der Kulissenführung kann die Position der Schaltsperre entsprechend gewählt werden, so dass ausgehend von der Neutralposition das Schalten in die nächstliegende Schaltgasse sichergestellt wird. Somit wird das Anwählen der übernächsten Schaltgasse verhindert.

Die konstruktive Ausgestaltung der Schaltgassenflanke kann an die jeweils verwendete Ausführung der Kulissenführung angepasst sein. Jedoch hat sich gezeigt, dass es von Vorteil ist, wenn das Ende der Schaltgassenflanke als Führungsschräge oder dergleichen ausgeführt ist. Auf diese Weise kann beim Zurückschalten aus einer Schaltgasse, die hinter der Schaltsperre liegt, eine Führung der Wählbewegung bei Rückschaltungen realisiert werden, so dass auch dabei keine Fehlschaltungen auftreten, so dass quasi automatisch der niedrige Gang aufgrund der Führungsschräge angewählt wird.

Nachfolgend wird die vorliegende Erfindung anhand der Zeichnungen weiter erläutert. Es zeigen:
Fig. 1 eine dreidimensionale schematische Ansicht einer Kulissenführung einer erfindungsgemäßen Schalteinrichtung; und
Fig. 2 eine dreidimensionale schematische Ansicht der Kulissenführung der Schalteinrichtung, bei der sich der von dem Schalthebel geführte Kulissenstift an einer Schaltsperre befindet.

In den Figuren ist eine mögliche Ausführungsvariante einer erfindungsgemäßen Schalteinrichtung mit einer Kulissenführung beispielhaft dargestellt, welche eine nicht weiter dargestellte Schalt- und Wählwelle zum Schalten der vorgesehenen Gangstufen des Fahrzeuggetriebes betätigt.

Die Kulissenführung 1 der vorgeschlagenen Schalteinrichtung weist ein Schaltbild zum Schalten von sieben Vorwärtsgangstufen G1, G2, G3, G4, G5, G6, G7 und einer Rückwärtsgangstufe R auf. Dazu umfasst die Kulissenführung 1 eine Wählgasse 2 und fünf Schaltgassen 3, 4, 5, 6, 7. Der ersten Schaltgasse 3 ist nur die Rückwärtsgangstufe R zugeordnet. Der zweiten Schaltgasse 4 sind die erste Vorwärtsgangstufe G1 und die zweite Vorwärtsgangstufe G2, der dritten Schaltgasse 5 sind der dritte Vorwärtsgang G3 und der vierte Vorwärtsgang G4, der vierten Schaltgasse 6 sind die fünfte Vorwärtsgangstufe G5 und die sechste Vorwärtsgangstufe G6 und der fünften Schaltgasse 7 ist nur die siebente Vorwärtsgangstufe G7 zugeordnet.

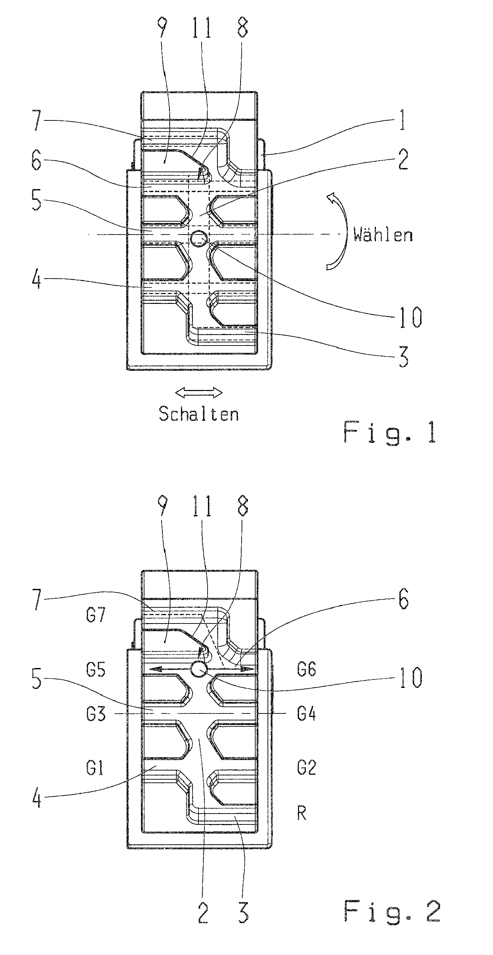

Die Geometrie bzw. das Schaltbild der Kulissenführung 1 entspricht einem nicht weiter dargestellten Schaltbild am Schalthebel, der von dem Fahrer betätigt wird. Durch die Bewegungen des Schalthebels wird ein Kulissenstift 10 der Kulissenführung 1 entsprechend bewegt. Wenn der Kulissenstift 10 entlang der Wählgasse 2 bewegt wird, wird eine Drehbewegung als Wählbewegung an der Schalt- und Wählwelle ausgeführt, welches durch einen Pfeil Wählen in Fig. 1 angedeutet ist. Wenn der Kulissenstift 10 in einer Schaltgasse 3, 4, 5, 6, 7 bewegt wird, wird eine axiale Bewegung der Schalt- und Wählwelle ausgelöst, welches durch einen Doppelpfeil Schalten in Fig. 1 angedeutet ist. In Fig. 1 ist der Kulissenstift 10 in der Neutralposition im Bereich der dritten Wählgasse 4 dargestellt.

Erfindungsgemäß umfasst die Kulissenführung 1 eine Schaltsperre 8 zum Verhindern eines unbeabsichtigten Überspringens einer Schaltgasse 6. Als Schaltsperre 8 ist die der vierten Schaltgasse 6 zugeordnete Schaltgassenflanke 9 entsprechend verlängert, so dass die verlängerte Schaltgassenflanke 9 als Schaltsperre 8 die Wählbewegung des Kulissenstiftes 10 entlang der Wählgasse 2 blockiert. Auf diese Weise schlägt der Kulissenstift 10 an der Schaltgassenflanke 9 an. Infolgedessen wird je nach Schaltrichtung das Schalten der fünften Vorwärtsgangstufe G5 oder der sechsten Vorwärtsgangstufe G6 sichergestellt. Auf diese Weise wird eine Fehlschaltung aus der Neutralposition in die siebente Vorwärtsgangstufe G7 sicher verhindert.

Fig. 2 zeigt die Position des Kulissenstiftes 10 in der Wählgasse 2 an der Schaltsperre 8.

Ferner ist in Fig. 2 eine Rückschaltung aus der siebenten Vorwärtsgangstufe G7 in die sechste Vorwärtsgangstufe G6 mittels einer gestrichelten Linie angedeutet. Um sicherzustellen, dass auch bei der Rückschaltung ein Überspringen der vierten Schaltgasse 6 bei der Wählbewegung des Kulissenstiftes 10 verhindert wird, weist die Schaltsperre 8 bzw. die verlängerte Schaltgassenflanke 9 eine Führungsschräge 11 auf. Entlang der Führungsschräge 11 wird der Kulissenstift 10 quasi automatisch bzw. zwangsgerichtet in die vierte Schaltgasse 6 zum Schalten der sechsten Vorwärtsgangstufe G6 geführt.

### Bezugszeichen

- 1: Kulissenführung
- 2: Wählgasse
- 3: erste Schaltgasse
- 4: zweite Schaltgasse
- 5: dritte Schaltgasse
- 6: vierte Schaltgasse
- 7: fünfte Schaltgasse
- 8: Schaltsperre
- 9: Schaltgassenflanke
- 10: Kulissenstift
- 11: Führungsschräge

## Patentansprüche

1. Schalteinrichtung mit einer eine Wählgasse (2) und mehrere Schaltgassen (3, 4, 5, 6, 7) aufweisenden Kulissenführung (1) für ein Fahrzeuggetriebe, wobei über die Kulissenführung (8) eine Schalt- und Wählwelle (1) zum Wählen und Schalten von zumindest mehreren Gangstufen (R, G1, G2, G3, G4, G5, G6, G7) betätigbar ist, **dadurch gekennzeichnet, dass** die Kulissenführung (1) zumindest eine Schaltsperre (8) zum unbeabsichtigten Überspringen einer Schaltgasse (6) aufweist.

2. Schalteinrichtung nach Anspruch 1, **dadurch gekennzeichnet, dass** als Schaltsperre (8) eine vorbestimmte Schaltgassenflanke (9) der Kulissenführung (1) derart verlängert ist, dass das Ende der Schaltgassenflanke (9) zum Blockieren der Wählbewegung eines Kulissenstiftes (10) der Kulissenführung (1) zumindest abschnittsweise in der Wählgasse (2) vorgesehen ist.

3. Schalteinrichtung nach Anspruch 2, **dadurch gekennzeichnet, dass** die Schaltgassenflanke (9) bei einer Kulissenführung (1) mit fünf Schaltgassen (3, 4, 5, 6, 7), denen acht Gangstufen (R, G1, G2, G3, G4, G5, G6, G7) zugeordnet sind, zwischen der der fünften und sechsten Gangstufe (G5, G6) zugeordneten vierten Schaltgasse (6) und der der siebenten Gangstufe (G7) zugeordneten fünften Schaltgasse (7) vorgesehen ist.

4. Schalteinrichtung nach Anspruch 2 oder 3, **dadurch gekennzeichnet, dass** das Ende der Schaltgassenflanke (9) eine Führungsschräge (11) aufweist.

5. Schalteinrichtung nach Anspruch 4, **dadurch gekennzeichnet, dass** die Führungsschräge (11) derart ausgerichtet ist, dass ausgehend von der fünften Schaltgasse (7) eine Wählbewegung des Kulissenstiftes in die vierte Wählgasse (6) zum Schalten der sechsten Gangstufe zwangsgerichtet ist.
